# EUROPEAN PATENT SPECIFICATION

(11) **EP 4 565 413 B1**
(45) Date of publication and mention of the grant of the patent: **29.04.2026**
(21) Application number: 23735713.2
(22) Date of filing: 27.06.2023
(51) Int. Cl.: B29C 73/26, F03D 80/50, B29C 70/48, B29C 70/86, B29D 99/00, B29B 17/02

(54) **METHOD FOR REMOVING A METAL INSERT**
VEFAHREN ZUM ENTFERNEN EINER METALLEINLAGE
PROCÉDÉ POUR ENLEVER UN INSERT MÉTALLIQUE

(30) Priority: 02.08.2022 EP 22188214
(43) Date of publication of application: 11.06.2025
(73) Proprietor: Nordex Energy SE & Co. KG, 22419 Hamburg (DE)
(72) Inventor: HASPEL, Benedikt, 22419 Hamburg (DE); KLEIN, Hendrik, 22419 Hamburg (DE); EHRICH, Kai, 22419 Hamburg (DE)
(74) Representative: Hauck Patent- und Rechtsanwälte PartmbB
(86) International application number: PCT/EP2023/067457
(87) International publication number: WO 2024/027997

(56) References cited:
- US-A1- 2021 180 572
- US-B2- 10 989 168

## Description

The invention relates to a method for removing a metal insert from a wind turbine rotor blade part. The metal insert is held in a fibrous composite material and is designed to fasten the wind turbine rotor blade part to a wind turbine rotor hub or to another wind turbine rotor blade part, that is to transfer large loads into the fibrous composite material. This purpose requires that the metal insert is stably and durably held in the fibrous composite material. Typically, no attention is paid to the question whether the metal insert could be removed from the fibrous composite material.

The document DE 10 2019 007 654 A1 discloses a recycling method for wind turbine rotor blades. The rotor blades are cut into pieces that can be transported with a truck to a recycling plant. At the recycling plant, any sections including embedded metal parts are cut off. Only the remaining parts without embedded metal parts are further processed with a shredder.

The document WO 2021/191296 A1 discloses a method of preparing a wind turbine rotor blade for recycling. The wind turbine rotor blade is sectioned into several parts based on the type of material and/or the material composition. A root section of a wind turbine blade comprises a majority of metal in weight percent. The several parts are converted into granulates by crushing and/or grinding, and the granulates are then subjected to chemical and/or thermal recycling separately.

The document EP 3 441 567 A1 discloses a wind turbine rotor blade prefab comprising a fibrous composite material and metal inserts embedded in the fibrous composite material. During manufacture, the metal inserts are arranged in a mold containing various layers of a fiber material. Between the fiber material and the metal insert, a polymer film forms a bonding material layer.

The document EP 2 781 344 B1 discloses a method of manufacturing a wind turbine rotor blade using metal inserts covered by a resin pre-impregnated fiber layer. The document EP 3 121 441 A1 discloses a method of manufacturing a wind turbine rotor blade root assembly including a plurality of metal inserts surrounded by a precured or pre-consolidated composite material. The metal inserts are surrounded by a thermoplastic material. In a step of welding the metal inserts to inner and outer layers of a fiber material, the metal inserts are heated.

The documents WO 2019/110068 A1 discloses a rotor blade according to the preamble of claim 14 and a method of repairing a joint connecting a wind turbine rotor blade to a rotor hub. The joint includes a plurality of bushings. In the case a bushing or the connection between a bushing and the surrounding laminate has become insufficient, the bushing is forcibly extracted by means of a jig.

Departing therefrom, it is an object of the invention to provide a method for removing a plurality of metal inserts from a wind turbine rotor blade part and a wind turbine rotor blade part designed to be subjected to this method.

This object is solved by the method of claim 1 and by the wind turbine rotor blade part of claim 14. Aspects to the invention are indicated in the dependent claims. The method is for removing a metal insert from a wind turbine rotor blade part and comprises the following steps:
- providing a wind turbine rotor blade part, the wind turbine rotor blade part comprising
   - a fibrous composite material and a metal insert held in the fibrous composite material, wherein the metal insert is designed to fasten the wind turbine rotor blade part to a wind turbine rotor hub or to another wind turbine rotor blade part, and
   - a connecting layer which is disposed between the metal insert and the fibrous composite material and which is connecting the metal insert to the fibrous composite material in a stable manner,
- weakening the connecting layer such that the connecting layer is connecting the metal insert to the fibrous composite material in a less stable manner, and
- removing the metal insert from the fibrous composite material.

The three steps of the method are carried out in the given order.

The wind turbine rotor blade part may be an entire wind turbine rotor blade or a section thereof, in particular a longitudinal section. In particular, the wind turbine rotor blade part may include a root section for fastening the wind turbine rotor blade to a wind turbine rotor hub and/or the wind turbine rotor blade part may include a longitudinal section of a wind turbine rotor blade having a connection section for connecting the wind turbine rotor blade part to another longitudinal section of the wind turbine rotor blade. The wind turbine rotor blade part comprises a fibrous composite material including strengthening fibers, such as glass fibers or carbon fibers, which are embedded in a polymer matrix, such as a cured polyester or epoxy resin. The fibrous composite material may in particular be a laminate.

Fastening of the wind turbine rotor blade part to the wind turbine rotor hub or to another wind turbine rotor blade part is carried out by means of the metal insert, which may be a sleeve, in particular a sleeve with a threaded bore, or a bolt. The metal insert is held and/or embedded in a fibrous composite material such that it is accessible from an outer side. For example, a front face of a sleeve-shaped metal insert may be flush or almost flush with a joining surface of the wind turbine rotor blade part, such that a threaded bolt can be inserted into a threaded bore of the sleeve. When the metal insert is a bolt, the bolt may comprise a free end extending beyond the joining surface of the wind turbine rotor blade part. The metal insert may have a longitudinal axis aligned with a longitudinal axis of the wind turbine rotor blade part. The metal insert may in particular consist of steel.

The wind turbine rotor blade part may be provided with any number of metal inserts, for example with only one, two, three or more than three metal inserts. Each of the metal inserts may be held in the fibrous composite material via a connecting layer and may be removable from the fibrous composite material.

No matter what shape the metal insert has, it is held in the fibrous composite material in a stable and durable manner, so that large loads can be transferred into the wind turbine rotor blade part via the metal insert. To this end, a connecting layer is disposed between the metal insert and the fibrous composite material. The connecting layer may have any composition different from the composition of the metal insert and different from the fibrous composite material. The connecting layer may be a thin layer, such as a coating or a film, or may have a substantial thickness, such as a sheath or sleeve surrounding the metal insert.

The connecting layer is a bifunctional layer serving two purposes. In a first, "regular" state of the connection layer, it serves to stably connect the metal insert and the fibrous composite material. In a second, weakened state of the connecting layer, the connection between the metal insert and the fibrous composite material is less stable, so that it is possible to remove the metal insert from the fibrous composite material. The connecting layer can be transferred from the "regular" state to the weakened state by performing the step of weakening the connecting layer, which may include one or more of the actions described herein below in greater detail.

After having performed the step of weakening the connecting layer, the metal insert is removed from the fibrous composite material. This may be done while the fibrous composite material is more or less intact, for example by pulling the metal insert out of the fibrous composite material, if desired with the help of a pulling tool, which may be fastened to the metal insert for example by means of a threaded connection. Such a pulling tool may apply a counteracting force onto a joining surface of the wind turbine rotor blade part and/or onto one or more further metal inserts of the wind turbine rotor blade part.

The inventive method allows removing of the metal insert with lower forces and/or lower effort. In particular, removing of the metal insert may be possible without damaging the metal insert and/or the fibrous composite material surrounding the metal insert.

In an aspect, the method is a repair method and comprises the further step:
- inserting another metal insert into a cavity in the fibrous composite material at a position where the removed metal insert was arranged.

The method in this aspect can be used in particular to repair a wind turbine rotor blade part having a plurality of metal inserts when problems with one or more of these inserts arise during operation or manufacture of the wind turbine rotor blade part. For example, when a wind turbine rotor blade part comprises 32 metal inserts and one of them is being damaged during transportation, this metal insert may be removed and replaced with a new metal insert. The same is true when the anchoring of a metal insert is impaired, for example due to delamination of the fibrous composite material in a vicinity of the metal insert or due to manufacturing imperfections such as an incomplete vacuum infusion of a resin leaving voids in the fibrous composite material next to the metal insert.

In an aspect, the method is a recycling method and comprises the further step:
- recycling of the metal insert and/or of the fibrous composite material after the metal insert has been removed from the fibrous composite material.

The method in this aspect can be used in particular in order to reuse the materials of the wind turbine rotor blade part when the service life of the wind turbine rotor blade part is over. For example, after having applied the method, the metal of the metal insert may be recycled, and/or the fibrous composite material separated from any metal inserts may be cut and grinded to form a granulate for use as a filler material in e.g. road building.

In an aspect, the method comprises the further step:
- manufacturing of the wind turbine rotor blade part including curing the fibrous composite material in a mold, arranging the metal insert and the connecting layer at their desired positions, and connecting the metal insert in a stable manner to the fibrous composite material via the connecting layer.

In this aspect, it is taken care to manufacture the wind turbine rotor blade part such that the connecting layer is specifically adapted to the step of weakening, so that the metal insert can easily be removed.

In an aspect, the step of manufacturing the wind turbine rotor blade part comprises applying the connecting layer to an outer surface of the metal insert and/or to a surface of a layer of a fiber material. In this aspect, the material forming the connecting layer can be applied to one or both of the elements to be connected, in particular prior to placing these elements in a mold.

In an aspect, the step of manufacturing the wind turbine rotor blade part comprises placing an adhesive in a gap between the metal insert and the fibrous composite material which forms the connecting layer. In this aspect, the material forming the connecting layer is an adhesive which is adapted so that the connecting layer can later be subjected to the step of weakening. The metal insert can be integrated into the wind turbine rotor blade part in particular after the fibrous composite material has been manufactured in a mold, and is fully cured.

In an aspect, the step of manufacturing the wind turbine rotor blade part comprises infusing a resin into a mold in which a fiber material and the metal insert are arranged. This is a well-established process and can be adapted such that the connecting layer is formed as desired, for example by applying the material forming the connecting layer to the metal insert and/or to a fiber material before placing these in the mold.

In an aspect, the connecting layer comprises a polymeric material. The polymeric material may be for example a thermoplastic material, so that the step of weakening can be carried out by applying heat. It may also be a thermoset material that is adapted such that the step of weakening can be carried out by other means (see below).

In an aspect, the connecting layer comprises a ceramic material. Ceramic materials are both very hard and brittle. This allows weakening of the connecting layer by causing cracks or similar disruptions in the ceramic material.

In an aspect, the wind turbine rotor blade part comprises a joining surface designed to be arranged next to a wind turbine rotor blade hub or next to another wind turbine rotor blade part, and the metal insert comprises a longitudinal direction, a circumferential surface embedded into the fibrous composite material, a front surface arranged at the joining surface and a back surface embedded into the fibrous composite material, wherein the connecting layer covers the entire circumferential surface and, optionally, the back surface. This makes sure a sufficiently strong bond between the metal insert and the fibrous composite material is obtained. In some cases, it is an advantage not to cover the back surface with the connecting layer, because the step of weakening the connecting layer may be difficult to carry out at that position. Weakening the connecting layer only at the circumferential surface is then sufficient to remove the metal insert.

In an aspect, the step of weakening the connecting layer is carried out by applying heat. This solution is applicable in particular when the connecting layer comprises a thermoplastic material that softens at a certain, elevated temperature so that the metal insert can be removed. However, weakening the connecting layer by applying heat can also be used in combination with connecting layers that are not thermoplastic, for example when the material of the connecting layer disintegrates or becomes brittle under heat, which may be sufficient to obtain the desired weakening effect.

In an aspect, the step of weakening the connecting layer is carried out by applying ultrasound. Ultrasound is another way to deliver energy to the connecting layer in order to weaken the connecting layer. Ultrasound may in particular be applied in a container with a suitable liquid (e.g. water) surrounding the wind turbine rotor blade part at least partly.

In an aspect, the step of weakening the connecting layer is carried out by applying a solvent. The entire wind turbine rotor blade part may be placed in the solvent. In addition or in the alternative, the solvent may be applied to the connecting layer in a more targeted manner, such as through suitable paths arranged in the fibrous composite material or in the metal insert. The connecting layer or some components comprised in the connecting layer are soluble in the solvent, so that at least parts of the connecting layer will be washed out of the wind turbine rotor blade part, or will lose the stability.

The wind turbine rotor blade part of claim 14 is designed to be subjected to a method according to any of the claims 1 to 13 and comprises:
- a fibrous composite material,
- a metal insert held in the fibrous composite material, wherein the metal insert is designed to fasten the wind turbine rotor blade part to a wind turbine rotor hub or to another wind turbine rotor blade part, and
- a connecting layer which is disposed between the metal insert and the fibrous composite material and which is connecting the metal insert to the fibrous composite material in a stable manner,
- wherein the wind turbine rotor blade part is adapted to enable a weakening of the connecting layer such that the connecting layer is connecting the metal insert to the fibrous composite material in a less stable manner.

With regard to the features and specific advantages of the wind turbine rotor blade part, reference is made to the above explanations of the related method, which apply to the wind turbine rotor blade part in a corresponding manner. The wind turbine rotor blade part may be adapted to include any of the features mentioned with reference to the method, for example as indicated in one or more of the following points:
- The wind turbine rotor blade part may have been manufactured by curing the fibrous composite material in a mold, arranging the metal insert and the connecting layer at their desired positions, and connecting the metal insert in a stable manner to the fibrous composite material via the connecting layer.
- The wind turbine rotor blade part may have been manufactured by applying the connecting layer to an outer surface of the metal insert and/or to a surface of a layer of a fiber material.
- The wind turbine rotor blade part may have been manufactured by placing an adhesive in a gap between the metal insert and the fibrous composite material which forms the connecting layer.
- The wind turbine rotor blade part may have been manufactured by infusion of a resin into a mold in which a fiber material and the metal insert are arranged.
- The connecting layer may comprise a polymeric material.
- The connecting layer may comprise a ceramic material.
- The wind turbine rotor blade part may comprise a joining surface designed to be arranged next to a wind turbine rotor blade hub or next to another wind turbine rotor blade part, and the metal insert comprises a longitudinal direction, a circumferential surface embedded into the fibrous composite material, a front surface arranged at the joining surface and a back surface embedded into the fibrous composite material, wherein the connecting layer covers the entire circumferential surface and, optionally, the back surface.
- The connecting layer may be adapted to be weakened by applying heat.
- The connecting layer may be adapted to be weakened by applying ultrasound.
- The connecting layer may be at least partly soluble in a solvent.

The invention is explained in greater detail with reference to embodiments shown in drawings.
- Fig. 1: shows a wind turbine rotor blade part in cross-section,
- Fig. 2: shows another wind turbine rotor blade part in cross-section,
- Fig. 3: shows the wind turbine rotor blade part of Fig. 1 in cross-section just before the metal insert is removed;
- Fig. 4: shows another wind turbine rotor blade part in cross-section just before the metal insert is removed; and
- Fig. 5: shows still another wind turbine rotor blade part in cross-section just before the metal insert is removed.

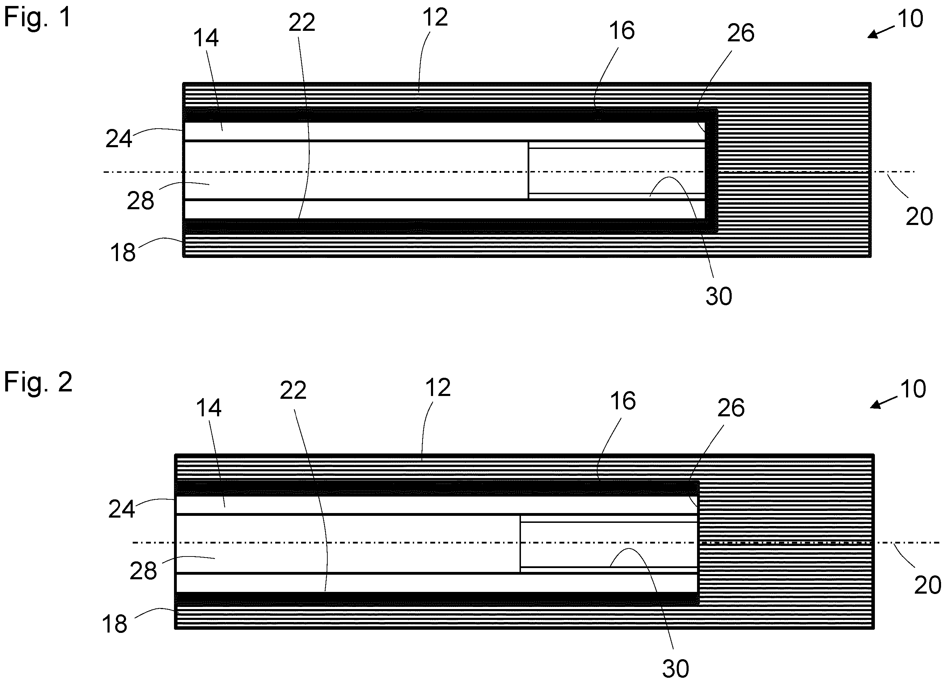

The wind turbine rotor blade part 10 shown in Fig. 1 is a part of a wind turbine rotor blade root section or alternatively a part of a connection region of a segmented rotor blade and comprises a fibrous composite material 12 and a metal insert 14. Between the fibrous composite material 12 and the metal insert 14, a connecting layer 16 is arranged.

The fibrous composite material 12 has a joining surface 18 designed to be arranged next to a wind turbine rotor blade hub.

The metal insert 14 has a longitudinal direction 20 which is aligned with a longitudinal axis of the wind turbine rotor blade part 10. The metal insert 14 is a sleeve having an outer circumferential surface 22, a front surface 24 arranged at the joining surface 18 and a back surface 26. The end of the sleeve at the back surface 26 may either be open or closed.

The metal insert 14 is embedded into the fibrous composite material 12, wherein the connecting layer 16 covers the entire outer circumferential surface 22 and the entire back surface 26. The front surface 24 is not covered by the connecting layer 16 and is accessible from the side of the wind turbine rotor blade part 10 with the joining surface 18.

A bore 28 is guided through the metal insert 14 along the longitudinal direction 20 and has an inner thread 30 close to the back surface 26. For fastening the wind turbine rotor blade part 10 to a wind turbine rotor hub or a complementary segment of a rotor blade (not shown), a fastener such as a bolt is inserted into the inner thread 30.

Fig. 2 shows another wind turbine rotor blade part 10 similar to the one of Fig. 1. In this embodiment, however, the back surface 26 of the metal insert 14 is not covered by the connecting layer 16. The connecting layer 16 exclusively covers the outer circumferential surface 22.

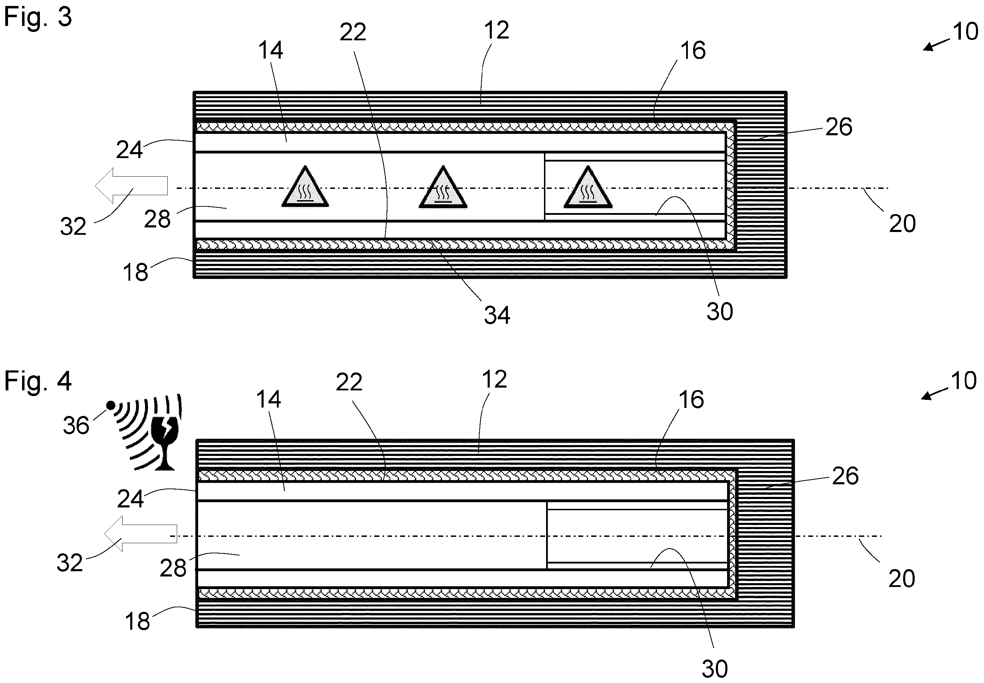

Fig. 3 shows the wind turbine rotor blade part 10 of Fig. 1 just before the metal insert 14 is removed. In order to weaken the connecting layer 16, heat 34 is applied to the metal insert 14. As a consequence, the connecting layer 16 is transferred into a weakened state such that the metal insert 14 is no longer held in the fibrous composite material 12, or only in a less stable manner. For this reason, the metal insert 14 can easily be removed from the fibrous composite material 12 by applying a pulling force 32.

Fig. 4 shows a situation similar to the one shown in Fig. 3, but with another wind turbine rotor blade part 10 comprising a connecting layer 16 that is weakened by application of ultrasound emitted by an ultrasound source 36. After the connecting layer 16 has been weakened in this way, the metal insert 14 can be removed from the fibrous composite material 12 by applying a pulling force 32.

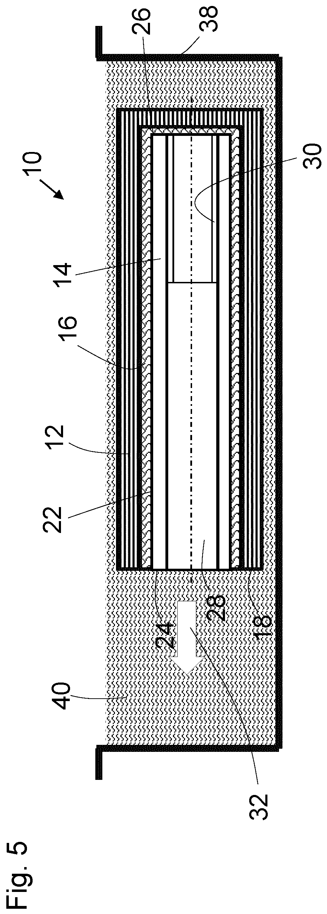

In Fig. 5, still another wind turbine rotor blade part 10 is shown which is placed in a container 38 filled with a solvent 40. The wind turbine rotor blade part 10 is similar to the one of Fig. 3, but has a connecting layer 16, that is weakened by application of the solvent 40. Once the connecting layer 16 has been weakened, the metal insert 14 is removed by applying a pulling force 32.

### List of reference numerals

- 10: wind turbine rotor blade part
- 12: fibrous composite material
- 14: metal insert
- 16: connecting layer
- 18: joining surface
- 20: longitudinal direction
- 22: circumferential surface
- 24: a front surface
- 26: back surface
- 28: bore
- 30: inner thread
- 32: pulling force
- 34: heat (symbol)
- 36: ultrasound source
- 38: container
- 40: solvent

## Claims

1. A method for removing a metal insert (14) from a wind turbine rotor blade part (10), the method comprising the following steps:
• providing a wind turbine rotor blade part (10), the wind turbine rotor blade part (10) comprising
- a fibrous composite material (12) and a metal insert (14) held in the fibrous composite material (12), wherein the metal insert (14) is designed to fasten the wind turbine rotor blade part (10) to a wind turbine rotor hub or to another wind turbine rotor blade part (10), and
- a connecting layer (16) which is disposed between the metal insert (14) and the fibrous composite material (12) and which is connecting the metal insert (14) to the fibrous composite material (14) in a stable manner,
• weakening the connecting layer (16) such that the connecting layer (16) is connecting the metal insert (14) to the fibrous composite material (12) in a less stable manner, and
• removing the metal insert (14) from the fibrous composite material (12).

2. The method of claim 1, wherein the method is a repair method and comprises the further step:
• inserting another metal insert (14) into a cavity in the fibrous composite material (12) at a position where the removed metal insert (14) was arranged.

3. The method of claim 1 or 2, wherein the method is a recycling method and comprises the further step:
• recycling of the metal insert (14) and/or of the fibrous composite material (12) after the metal insert (14) has been removed from the fibrous composite material (12).

4. The method of any of the claims 1 to 3, wherein the method comprises the further step:
• manufacturing of the wind turbine rotor blade part (10) including curing the fibrous composite material (12) in a mold, arranging the metal insert (14) and the connecting layer (16) at their desired positions, and connecting the metal insert (14) in a stable manner to the fibrous composite material (12) via the connecting layer (16).

5. The method of claim 4, wherein the step of manufacturing of the wind turbine rotor blade part (10) comprises applying the connecting layer (16) to an outer surface of the metal insert (14) and/or to a surface of a layer of a fiber material.

6. The method of any of claim 4 or 5, wherein the step of manufacturing of the wind turbine rotor blade part (10) comprises placing in a gap between the metal insert (14) and the fibrous composite material (12) an adhesive which forms the connecting layer (16).

7. The method of any of the claims 4 to 6, wherein the step of manufacturing of the wind turbine rotor blade (10) part comprises infusion of a resin into a mold in which a fiber material and the metal insert (14) are arranged.

8. The method of any of the claims 1 to 7, wherein the connecting layer (16) comprises a polymeric material.

9. The method of any of the claims 1 to 8, wherein the connecting layer (16) comprises a ceramic material.

10. The method of any of the claims 1 to 9, wherein the wind turbine rotor blade part (10) comprises a joining surface (18) designed to be arranged next to a wind turbine rotor blade hub or next to another wind turbine rotor blade part (10), and the metal insert (14) comprises a longitudinal direction (20), a circumferential surface (22) embedded into the fibrous composite material (12), a front surface (24) arranged at the joining surface (18) and a back surface (26) embedded into the fibrous composite material (12), wherein the connecting layer (16) covers the entire circumferential surface (22) and, optionally, the back surface (26).

11. The method of any of the claims 1 to 10, wherein the step of weakening the connecting layer (16) is carried out by applying heat.

12. The method of any of the claims 1 to 11, wherein the step of weakening the connecting layer (16) is carried out by applying ultrasound.

13. The method of any of the claims 1 to 12, wherein the step of weakening the connecting layer (16) is carried out by applying a solvent (40).

14. A wind turbine rotor blade part (10) designed to be subjected to a method according to any of the claims 1 to 13, the wind turbine rotor blade part (10) comprising:
• a fibrous composite material (12),
• a metal insert (14) held in the fibrous composite material (12), wherein the metal insert (14) is designed to fasten the wind turbine rotor blade part (10) to a wind turbine rotor hub or to another wind turbine rotor blade part (10), and
• a connecting layer (16) which is disposed between the metal insert (14) and the fibrous composite material (12) and which is connecting the metal insert (14) to the fibrous composite material (12) in a stable manner,
• **characterized in that** the wind turbine rotor blade part (10) is adapted to enable a weakening of the connecting layer (16) such that the connecting layer (16) is connecting the metal insert (14) to the fibrous composite material (12) in a less stable manner.

## Patentansprüche

1. Verfahren zum Entfernen eines Metalleinsatzes (14) aus einem Windenergieanlagenrotorblattteil (10), wobei das Verfahren die folgenden Schritte umfasst:
• Bereitstellen eines Windenergieanlagenrotorblattteils (10), wobei das Windenergieanlagenrotorblattteil (10) umfasst
- ein faserverstärktes Verbundmaterial (12) und einen in dem faserverstärkten Verbundmaterial (12) gehaltenen Metalleinsatz (14), wobei der Metalleinsatz (14) dazu ausgelegt ist, das Windenergieanlagenrotorblattteil (10) mit einer Windenergieanlagenrotorblattnabe oder mit einem weiteren Windenergieanlagenrotorblattteil (10) zu verbinden, und
- eine Verbindungsschicht (16), die zwischen dem Metalleinsatz (14) und dem faserverstärkten Verbundmaterial (12) angeordnet ist und den Metalleinsatz (14) stabil mit dem faserverstärkten Verbundmaterial (12) verbindet,
• Schwächen der Verbindungsschicht (16) derart, dass die Verbindungsschicht (16) den Metalleinsatz (14) weniger stabil mit dem faserverstärkten Verbundmaterial (12) verbindet, und
• Entfernen des Metalleinsatzes (14) aus dem faserverstärkten Verbundmaterial (12).

2. Verfahren nach Anspruch 1, wobei das Verfahren ein Reparaturverfahren ist und ferner den folgenden Schritt umfasst:
• Einsetzen eines weiteren Metalleinsatzes (14) in einen Hohlraum im faserverstärkten Verbundmaterial (12) an einer Position, an der der entfernte Metalleinsatz (14) angeordnet war.

3. Verfahren nach Anspruch 1 oder 2, wobei das Verfahren ein Recyclingverfahren ist und ferner den folgenden Schritt umfasst:
• Recyceln des Metalleinsatzes (14) und/oder des faserverstärkten Verbundmaterials (12), nachdem der Metalleinsatz (14) aus dem faserverstärkten Verbundmaterial (12) entfernt wurde.

4. Verfahren nach einem der Ansprüche 1 bis 3, wobei das Verfahren ferner den folgenden Schritt umfasst:
• Herstellen des Windenergieanlagenrotorblattteils (10), einschließlich Aushärten des faserverstärkten Verbundmaterials (12) in einer Form, Anordnen des Metalleinsatzes (14) und der Verbindungsschicht (16) an ihren gewünschten Positionen sowie stabiles Verbinden des Metalleinsatzes (14) mit dem faserverstärkten Verbundmaterial (12) über die Verbindungsschicht (16).

5. Verfahren nach Anspruch 4, wobei der Schritt des Herstellens des Windenergieanlagenrotorblattteils (10) umfasst, die Verbindungsschicht (16) auf eine Außenoberfläche des Metalleinsatzes (14) und/oder auf eine Oberfläche einer Lage eines Fasermaterials aufzubringen.

6. Verfahren nach Anspruch 4 oder 5, wobei der Schritt des Herstellens des Windenergieanlagenrotorblattteils (10) umfasst, einen Klebstoff, der die Verbindungsschicht (16) bildet, in einen Spalt zwischen dem Metalleinsatz (14) und dem faserverstärkten Verbundmaterial (12) einzubringen.

7. Verfahren nach einem der Ansprüche 4 bis 6, wobei der Schritt des Herstellens des Windenergieanlagenrotorblattteils (10) eine Infusion eines Harzes in eine Form umfasst, in der ein Fasermaterial und der Metalleinsatz (14) angeordnet sind.

8. Verfahren nach einem der Ansprüche 1 bis 7, wobei die Verbindungsschicht (16) ein polymeres Material umfasst.

9. Verfahren nach einem der Ansprüche 1 bis 8, wobei die Verbindungsschicht (16) ein keramisches Material umfasst.

10. Verfahren nach einem der Ansprüche 1 bis 9, wobei das Windenergieanlagenrotorblattteil (10) eine Verbindungsfläche (18) umfasst, die dazu ausgelegt ist, an eine Windenergieanlagenrotornabe oder an ein weiteres Windenergieanlagenrotorblattteil (10) angrenzend angeordnet zu werden, und wobei der Metalleinsatz (14) eine Längsrichtung (20), eine in das faserverstärkte Verbundmaterial (12) eingebettete Mantelfläche (22), eine an der Verbindungsfläche (18) angeordnete Stirnfläche (24) und eine in das faserverstärkte Verbundmaterial (12) eingebettete Rückfläche (26) umfasst, wobei die Verbindungsschicht (16) die gesamte Mantelfläche (22) und optional die Rückfläche (26) bedeckt.

11. Verfahren nach einem der Ansprüche 1 bis 10, wobei der Schritt des Schwächens der Verbindungsschicht (16) durch Anwenden von Wärme durchgeführt wird.

12. Verfahren nach einem der Ansprüche 1 bis 11, wobei der Schritt des Schwächens der Verbindungsschicht (16) durch Anwenden von Ultraschall durchgeführt wird.

13. Verfahren nach einem der Ansprüche 1 bis 12, wobei der Schritt des Schwächens der Verbindungsschicht (16) durch Anwenden eines Lösungsmittels (40) durchgeführt wird.

14. Windenergieanlagenrotorblattteil (10), ausgelegt zur Durchführung eines Verfahrens nach einem der Ansprüche 1 bis 13, wobei das Windenergieanlagenrotorblattteil (10) umfasst:
• ein faserverstärktes Verbundmaterial (12),
• einen in dem faserverstärkten Verbundmaterial (12) gehaltenen Metalleinsatz (14), wobei der Metalleinsatz (14) dazu ausgelegt ist, das Windenergieanlagenrotorblattteil (10) mit einer Windenergieanlagenrotornabe oder mit einem weiteren Windenergieanlagenrotorblattteil (10) zu verbinden, und
• eine Verbindungsschicht (16), die zwischen dem Metalleinsatz (14) und dem faserverstärkten Verbundmaterial (12) angeordnet ist und den Metalleinsatz (14) stabil mit dem faserverstärkten Verbundmaterial (12) verbindet,
• **dadurch gekennzeichnet, dass** das Windenergieanlagenrotorblattteil (10) dazu ausgebildet ist, ein Schwächen der Verbindungsschicht (16) zu ermöglichen, sodass die Verbindungsschicht (16) den Metalleinsatz (14) weniger stabil mit dem faserverstärkten Verbundmaterial (12) verbindet.

## Revendications

1. Procédé permettant de retirer un insert métallique (14) d'une partie (10) de pale de rotor d'éolienne, le procédé comportant les étapes suivantes :
• la fourniture d'une partie (10) de pale de rotor d'éolienne, la partie (10) de pale de rotor d'éolienne comportant
- un matériau composite fibreux (12) et un insert métallique (14) maintenu dans le matériau composite fibreux (12), dans lequel l'insert métallique (14) est conçu pour serrer la partie (10) de pale de rotor d'éolienne sur un moyeu de rotor d'éolienne ou sur une autre partie (10) de pale de rotor d'éolienne et
- une couche de liaison (16) qui est disposée entre l'insert métallique (14) et le matériau composite fibreux (12) et qui relie l'insert métallique (14) au matériau composite fibreux (14) de manière stable,
• l'affaiblissement de la couche de liaison (16), de sorte que la couche de liaison (16) relie l'insert métallique (14) au matériau composite fibreux (12) de manière moins stable et
• le retrait de l'insert métallique (14) du matériau composite fibreux (12).

2. Procédé selon la revendication 1, dans lequel le procédé est un procédé de réparation et comporte une étape supplémentaire :
• l'insertion d'un autre insert métallique (14) dans une cavité dans le matériau composite fibreux (12) au niveau d'une position où l'insert métallique (14) retiré a été agencé.

3. Procédé selon la revendication 1 ou 2, dans lequel le procédé est un procédé de recyclage et comporte une étape supplémentaire :
• le recyclage de l'insert métallique (14) et/ou du matériau composite fibreux (12) après que l'insert métallique (14) a été retiré du matériau composite fibreux (12).

4. Procédé selon l'une quelconque des revendications 1 à 3, dans lequel le procédé comporte une étape supplémentaire :
• la fabrication de la partie (10) de pale de rotor d'éolienne incluant le durcissement du matériau composite fibreux (12) dans un moule, l'agencement de l'insert métallique (14) et de la couche de liaison (16) au niveau de leurs positions souhaitées et la liaison de l'insert métallique (14) de manière stable au matériau composite fibreux (12) via la couche de liaison (16).

5. Procédé selon la revendication 4, dans lequel l'étape de fabrication de la partie (10) de pale de rotor d'éolienne comporte l'application de la couche de liaison (16) à une surface extérieure de l'insert métallique (14) et/ou à une surface d'une couche d'un matériau de fibre.

6. Procédé selon l'une quelconque des revendications 4 ou 5, dans lequel l'étape de fabrication de la partie (10) de pale de rotor d'éolienne comporte le placement, dans un espace entre l'insert métallique (14) et le matériau composite fibreux (12), d'un adhésif qui forme la couche de liaison (16).

7. Procédé selon l'une quelconque des revendications 4 à 6, dans lequel l'étape de fabrication de la partie de pale (10) de rotor d'éolienne comporte l'infusion d'une résine dans un moule dans lequel un matériau de fibre et l'insert métallique (14) sont agencés.

8. Procédé selon l'une quelconque des revendications 1 à 7, dans lequel la couche de liaison (16) comporte un matériau polymère.

9. Procédé selon l'une quelconque des revendications 1 à 8, dans lequel la couche de liaison (16) comporte un matériau céramique.

10. Procédé selon l'une quelconque des revendications 1 à 9, dans lequel la partie (10) de pale de rotor d'éolienne comporte une surface de jonction (18) conçue pour être agencée près d'un moyeu de pale de rotor d'éolienne ou près d'une autre partie (10) de pale de rotor d'éolienne et l'insert métallique (14) comporte une direction longitudinale (20), une surface circonférentielle (22) incorporée dans le matériau composite fibreux (12), une surface avant (24) agencée au niveau de la surface de jonction (18) et une surface arrière (26) incorporée dans le matériau composite fibreux (12), dans lequel la couche de liaison (16) couvre l'intégralité de la surface circonférentielle (22) et, de manière optionnelle, la surface arrière (26).

11. Procédé selon l'une quelconque des revendications 1 à 10, dans lequel l'étape d'affaiblissement de la couche de liaison (16) est réalisée par application de chaleur.

12. Procédé selon l'une quelconque des revendications 1 à 11, dans lequel l'étape d'affaiblissement de la couche de liaison (16) est réalisée par application d'ultrasons.

13. Procédé selon l'une quelconque des revendications 1 à 12, dans lequel l'étape d'affaiblissement de la couche de liaison (16) est réalisée par application d'un solvant (40).

14. Partie (10) de pale de rotor d'éolienne conçue pour être soumise à un procédé selon l'une quelconque des revendications 1 à 13, la partie (10) de pale de rotor d'éolienne comportant :
• un matériau composite fibreux (12),
• un insert métallique (14) maintenu dans le matériau composite fibreux (12), dans lequel l'insert métallique (14) est conçu pour serrer la partie (10) de pale de rotor d'éolienne sur un moyeu de rotor d'éolienne ou sur une autre partie (10) de pale de rotor d'éolienne et
• une couche de liaison (16) qui est disposée entre l'insert métallique (14) et le matériau composite fibreux (12) et qui relie l'insert métallique (14) au matériau composite fibreux (12) de manière stable,
• **caractérisé en ce que** la partie (10) de pale de rotor d'éolienne est adaptée pour permettre un affaiblissement de la couche de liaison (16), de sorte que la couche de liaison (16) relie l'insert métallique (14) au matériau composite fibreux (12) de manière moins stable.
